# EUROPEAN PATENT APPLICATION

(11) **EP 4 834 132 A1**
(43) Date of publication of application: **04.11.2026**
(21) Application number: 25905651.3
(22) Date of filing: 19.11.2025
(51) Int. Cl.: A24D 3/02, A24D 3/10, B01D 39/18

(54) **PLASTICIZER INPUT DEVICE**

(30) Priority: 14.03.2025 KR 20250033385
(71) Applicant: KT&G Corporation, Daedeok-gu Daejeon 34337 (KR)
(72) Inventor: BAE, Hyung Jin, Daejeon 34128 (KR)
(74) Representative: AWA Sweden AB
(86) International application number: PCT/KR2025/095740
(87) International publication number: WO 2026/192173

(57) **Abstract**

The present disclosure relates to a plasticizer supply apparatus and, more particularly, to an apparatus in which a nozzle is disposed in front of an air jet to spray plasticizer onto a tow. In the plasticizer supply apparatus according to an embodiment of the present disclosure, the nozzle is disposed in front of the air jet so that plasticizer is sprayed onto the tow in a spread-fiber state before the tow is wound, thereby uniformly distributing the plasticizer over an entire filter.

## Description

### Technical Field

This application claims priority from and the benefit of Korea Patent Application No. 10-2025-0033385, filed on March 14, 2025, the disclosures of which are incorporated herein by reference in its entirety.

The present disclosure relates to a plasticizer supply apparatus and, more particularly, to an apparatus in which a nozzle is disposed in front of an air jet to spray plasticizer onto a tow.

### Background Art

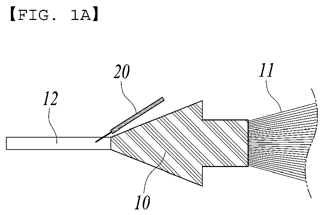

As illustrated in FIG. 1A, an air jet 10 is a device that injects air into a cylinder with open opposite ends and passes a tow 11 therethrough, thereby winding the tow 11 and manufacturing a filter 12 of a cigarette. The air jet 10 is also referred to as a Trans Jet or a transport jet.

The tow 11 may move at a high speed by an airflow, whereby the filter 12 may be uniformly wound. In the related art, a nozzle 20 is disposed at a rear side of the air jet 10, and plasticizer may be supplied to the filter in a free-fall manner.

The plasticizer is an artificial material that softens and provides flexibility to cellulose acetate fibers, which are the material of the tow 11. Triacetin is mainly used as the plasticizer. The plasticizer slightly dissolves surfaces of the fibers, thereby enabling bonding between the fibers to be achieved.

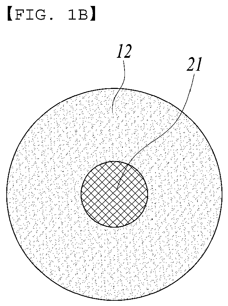

However, there is a possibility that plasticizer supplied at a time point at which the tow 11 converges into a wound shape may dissolve surfaces of the fibers, thereby causing holes to be formed in a cross section of the filter. In addition, as illustrated in FIG. 1B, there is a possibility that the plasticizer 21 may be concentrated at a center of the filter 12, thereby degrading the quality of the filter 12.

### DISCLOSURE

### Technical Problem

An object of the present disclosure is to provide an apparatus in which a nozzle is disposed in front of an air jet so that plasticizer may be sprayed to a tow.

### Technical Solution

A plasticizer supply apparatus according to an embodiment of the present disclosure may be an apparatus for spraying plasticizer onto a tow passing through an air jet. The plasticizer supply apparatus may include a housing and a nozzle. The housing may be located on a movement path of the tow moving toward the air jet. The housing allows the tow to pass therethrough. The nozzle may be installed on the housing and configured to spray the plasticizer toward the tow.

### Advantageous Effects

In a plasticizer supply apparatus according to an embodiment of the present disclosure, a nozzle may be disposed in front of an air jet so that plasticizer may be sprayed onto a tow in a spread-fiber state before the tow is wound, thereby uniformly distributing the plasticizer over an entire filter.

Accordingly, hole formation in the filter or concentration of plasticizer may be prevented, thereby enabling manufacture of a high-quality filter.

In addition, the plasticizer may be uniformly sprayed through the nozzle and a supply unit in a pressure-based spray manner, thereby ensuring consistent flavor and quality of the filter.

Furthermore, the uniform spraying of the plasticizer may also reduce a rework rate. In addition, waste of materials including the plasticizer may be reduced, thereby minimizing cost and environmental issues.

### Brief Description of Drawings

FIG. 1A is a view illustrating a conventional plasticizer supply method.
FIG. 1B is a cross-sectional view of a filter.
FIG. 2 is a perspective view of a plasticizer supply apparatus according to a first embodiment of the disclosure.
FIG. 3 is a view illustrating a state of spraying plasticizer onto a tow.
FIG. 4 is an enlarged view illustrating a first embodiment of a first mounting unit.
FIG. 5 is a conceptual diagram of a supply unit.
FIG. 6 is a perspective view of a plasticizer supply apparatus according to a second embodiment of the disclosure.
FIG. 7 is an enlarged view illustrating a second embodiment of the first mounting unit.
FIG. 8 is an enlarged view of portion A illustrated in FIG. 6.
FIG. 9 is an enlarged view of portion B illustrated in FIG. 6.
FIG. 10 is an exploded perspective view illustrating a second embodiment of a second mounting unit.
FIG. 11 is a side view of the second mounting unit illustrated in FIG. 10.
FIG. 12 is an exploded perspective view illustrating a third embodiment of the second mounting unit.

### Best Mode

Since the present disclosure may be modified in various forms, and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "include", "have", etc., when used in this specification, are intended to specify the presence of stated features, integers, steps, operations, elements, components, and/or combinations thereof, but do not preclude the presence or addition of one or more other features, integers, steps, operations, elements, components, and/or combinations thereof.

Hereinafter, embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements are enlarged, omitted, or depicted schematically.

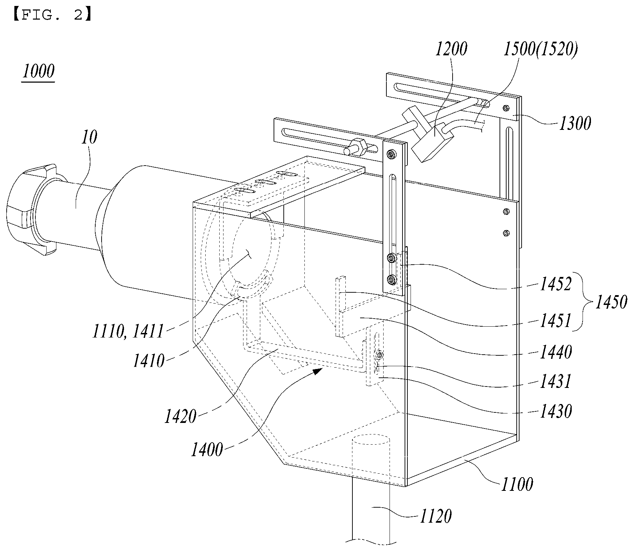

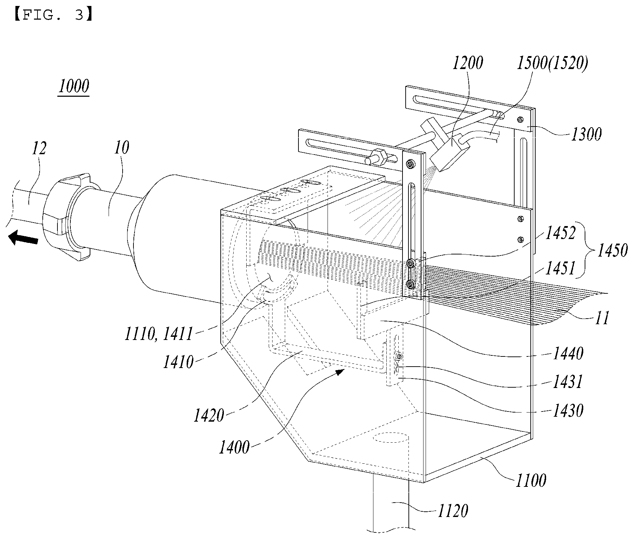

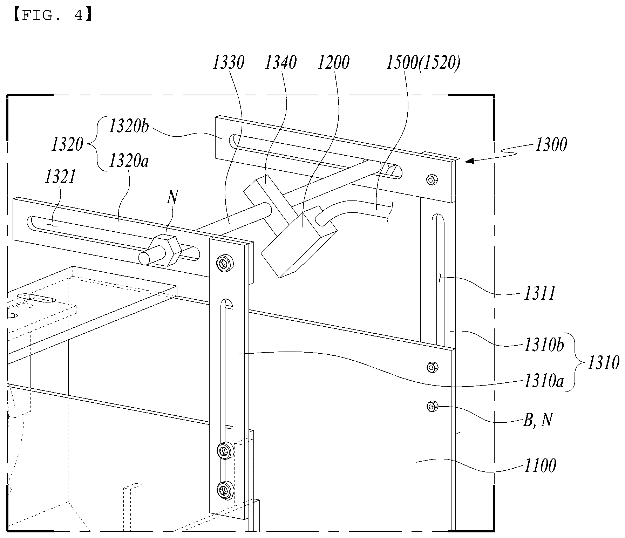

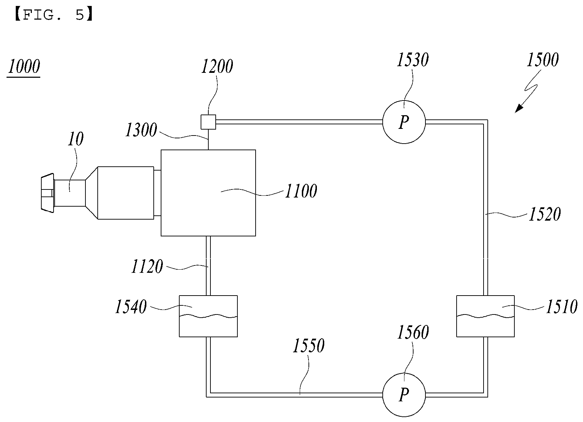

FIG. 2 is a perspective view of a plasticizer supply apparatus according to a first embodiment of the disclosure. FIG. 3 is a view illustrating a state of spraying plasticizer onto a tow. FIG. 4 is an enlarged view illustrating a first embodiment of a first mounting unit. FIG. 5 is a conceptual diagram of a supply unit.

As illustrated in FIGS. 2 and 3, a plasticizer supply apparatus 1000 is an apparatus that supplies plasticizer onto a tow 11 passing through an air jet 10. The plasticizer supply apparatus 1000 may include a housing 1100, a nozzle 1200, a first mounting unit 1300, and a second mounting unit 1400.

The housing 1100 has a hollow polyhedral structure. The housing 1100 may be positioned on a movement path of the tow 11 that moves toward the air jet 10. The tow 11 may pass through the housing 1100. In an embodiment, the housing 1100 is installed in front of the air jet 10 along a movement direction of the tow 11 such that the tow 11 may pass therethrough.

An outer side surface of one side of the housing 1100 may be fixed in front of the air jet 10. A through hole 1110 may be formed in one side surface of the housing 1100 and may be in communication with the air jet 10. In the present specification, a front of the air jet 10 may refer to a direction in which the tow 11 is introduced into the air jet 10.

Fixing between components of the plasticizer supply apparatus 1000 may be performed by known fastening elements such as bolts, screws, pins, and clamps, or by welding. Redundant descriptions thereof are omitted.
the other side surface of the housing 1100 may be open such that the tow 11 may pass therethrough. An upper surface of the housing 1100 may be open such that plasticizer may be sprayed onto the tow 11.

The nozzle 1200 may be installed on the housing 1100 and may spray the plasticizer toward the tow 11. The plasticizer may include at least one selected from the group consisting of triacetin (TA), triethyl citrate (TEC), and polyethylene glycol.

As a spray condition of the plasticizer, it may be preferable that the nozzle 1200 be positioned within a height range from 2 cm to 3 cm from the tow 11 in a spread-fiber state. With regard to a spray pressure, it may be preferable that the nozzle 1200 spray the plasticizer within a pressure range from 0.005 MPa to 0.001 MPa using a spray method.

That is, the nozzle 1200 may be positioned in front of the air jet 10 and may spray plasticizer onto the tow 11 in a spread-fiber state before the tow 11 is wound, so that the plasticizer may be uniformly distributed throughout a filter. Accordingly, hole formation in the filter or concentration of plasticizer may be prevented, thereby enabling manufacture of a high-quality filter.

In addition, the plasticizer may be uniformly sprayed through the nozzle 1200 in a pressure-based spray manner, thereby ensuring consistent flavor and quality of the filter. The uniform spraying of the plasticizer may also reduce a rework rate. Furthermore, waste of materials including the plasticizer may be reduced, thereby reducing cost and minimizing environmental issues.

A first embodiment of the second mounting unit 1400 may be installed inside the housing 1100 so that the tow 11 may be positioned thereon. The second mounting unit 1400 may allow the tow 11 to be placed thereon and may support the tow 11.

The second mounting unit 1400 may be adjusted in height so as to apply tension to the tow 11 and allow the tow 11 to maintain a taut state. In addition, the second mounting unit 1400 may reduce a width of the tow 11 in advance so that the tow 11 may be easily introduced into the air jet 10.

The second mounting unit 1400 may include a second fixed frame 1410, a second connecting frame 1420, a second vertical frame 1430, a second horizontal frame 1440, and a width adjusting frame 1450. The second fixed frame 1410, the second connecting frame 1420, the second vertical frame 1430, the second horizontal frame 1440, and the width adjusting frame 1450 may each be formed in a plate shape.

The second fixed frame 1410 may be brought into contact with and fixed to an inner side surface of one side of the housing 1100. The second fixed frame 1410 may have a communication hole 1411 corresponding to the through hole 1110 to allow the tow 11 to pass therethrough.

The second connecting frame 1420 may be formed in a U-shape with angular lower corners. One end of the second connecting frame 1420 may be fixed to a lower end of the second fixing frame 1410. The second vertical frame 1430 may be brought into contact with and fixed to the other end of the second connecting frame 1420 by a bolt and a nut.

A second vertical frame slot 1431 may be formed in the second vertical frame 1430 along a longitudinal direction of the second vertical frame 1430. A position of the second vertical frame 1430 may be adjusted upward or downward so that the height of the second mounting unit 1400 may be adjusted. The second vertical frame 1430 may be fixed to the second connecting frame 1420 by the bolt that passes through the second connecting frame 1420 and the second vertical frame slot 1431 and is coupled with the nut.

The second horizontal frame 1440 may be fixed to an upper end of the second vertical frame 1430 and may be disposed below the tow 11. The width adjusting frame 1450 may be provided as a pair including a first width-adjusting frame 1451 and a second width-adjusting frame 1452. The width adjusting frames 1450 may be vertically fixed to respective both sides of the second horizontal frame 1440 and may be disposed on respective both sides of the tow 11.

As illustrated in FIGS. 3 and 4, a first embodiment of the first mounting unit 1300 may be fixed to an upper portion of the housing 1100, and the nozzle 1200 may be disposed on the first mounting unit 1300. The first mounting unit 1300 may include a first vertical frame 1310, a first horizontal frame 1320, a first connecting frame 1330, and a first fixing frame 1340.

The first vertical frame 1310 and the first horizontal frame 1320 may each be formed in a plate shape. The first vertical frame 1310 may be provided as a pair including a first-1 vertical frame 1310a and a first-2 vertical frame 1310b. Lower ends of the first vertical frames 1310 may be fixed to respective both side surfaces of the housing 1100 by bolts B and nuts N.

A first vertical frame slot 1311 may be formed in the first vertical frame 1310 along a longitudinal direction of the first vertical frame 1310. The positions of the first vertical frames 1310 may be adjusted upward or downward so that a height of the nozzle 1200 may be adjusted.

In the case where the nozzle 1200 is positioned excessively close to the tow 11, plasticizer may be sprayed in a concentrated manner onto a partial region of the tow 11. In the case where the nozzle 1200 is positioned excessively far from the tow 11, it is difficult for plasticizer to be sprayed onto the tow 11.

That is, the height of the nozzle 1200 may be adjusted, whereby a distance between the nozzle 1200 and the tow 11 and a spraying range of plasticizer may be adjusted. In addition, each first vertical frame 1310 may be fixed in place by the bolt B that passes through the corresponding side surface of the housing 1100 and the first vertical frame slot 1311 and is coupled with the nut N.

The first horizontal frame 1320 may be provided as a pair including a first-1 horizontal frame 1320a and a first-2 horizontal frame 1320b, which may be respectively fixed to upper ends of the first vertical frames 1310. The first horizontal frame 1320 may integrally extend from the corresponding first vertical frame 1310 or may be fixed to the first vertical frame 1310 by a bolt B and a nut N.

The first connecting frame 1330 and the first fixed frame 1340 may each be formed in a rod shape. The first connecting frame 1330 may be installed between the first horizontal frames 1320. A first horizontal frame slot 1321 may be formed in the first horizontal frame 1320 along a longitudinal direction of the first horizontal frame 1320. End of the first connecting frame 1330 may penetrate the corresponding first horizontal frame slot 1321.

In the case where the nozzle 1200 is disposed excessively close to the air jet 10, plasticizer may flow into other equipment through the air jet 10. In the case where the nozzle 1200 is disposed excessively far from the air jet 10, it may be difficult for plasticizer to be sprayed over an overall surface of the tow 11.

When the first connecting frame 1330 linearly moves along the first horizontal frame slots 1321, the nozzle 1200 may advance toward or retreat from the air jet 10, whereby the position of the nozzle 1200 may be adjusted.

The first connecting frame 1330 may be fixed to the first horizontal frames 1320 by the nuts N that are threaded onto the end of the first connecting frame 1330 and are brought into close contact with the corresponding first horizontal frames 1320. The first fixed frame 1340 may be vertically fitted over the first connecting frame 1330 and may be fixed thereto. The nozzle 1200 may be fixed to a lower end of the first fixed frame 1340.

As illustrated in FIGS. 3 and 5, the plasticizer supply apparatus 1000 may further include a supply unit 1500. The supply unit 1500 may supply plasticizer to the nozzle 1200. The supply unit 1500 may include a supply tank 1510, a supply pipe 1520, and a supply pump 1530.

The supply tank 1510 may contain plasticizer. The supply pipe 1520 may be installed between the nozzle 1200 and the supply tank 1510. The supply pump 1530 may be installed on the supply pipe 1520 and may pump the plasticizer to the nozzle 1200 at a preset pressure.

A drain pipe 1120 may be installed on a lower surface of the housing 1100 and may be in communication with an interior of the housing 1100. Plasticizer may remain inside the housing 1100 after being sprayed onto the tow 11. The plasticizer that remains inside the housing 1100 may be drained to the outside through the drain pipe 1120.

Here, in the case where the tow 11 is fabricated as a non-flavored filter using only plasticizer, the plasticizer may be reused. To this end, the supply unit 1500 may further include a recovery tank 1540, a recovery pipe 1550, and a recovery pump 1560.

The recovery tank 1540 may be disposed below the housing 1100. The drain pipe 1120 may be installed on and be in communication with the recovery tank 1540. The recovery pipe 1550 may be installed between the recovery tank 1540 and the supply tank 1510. The recovery pump 1560 may be installed on the recovery pipe 1550 and may pump plasticizer received in the recovery tank 1540 to the supply tank 1510 under pressure.

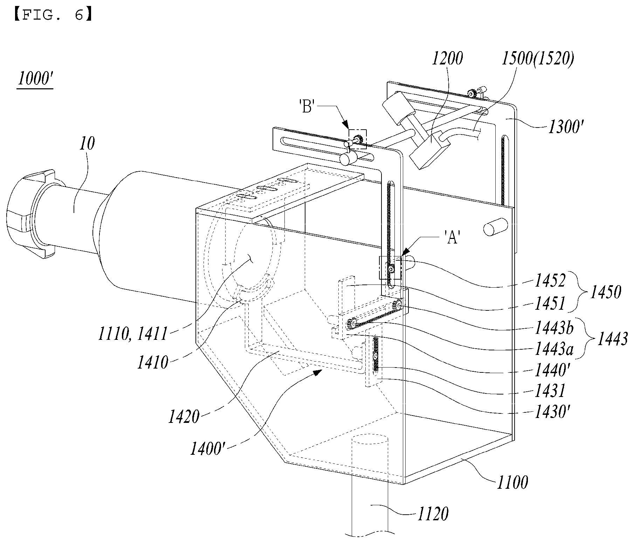

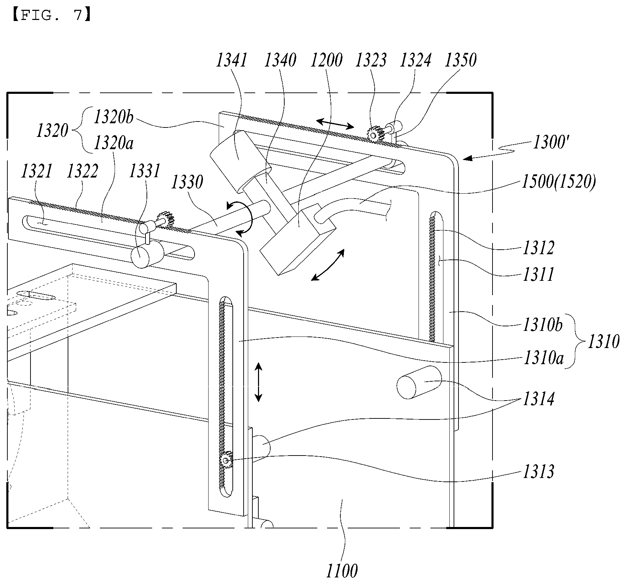

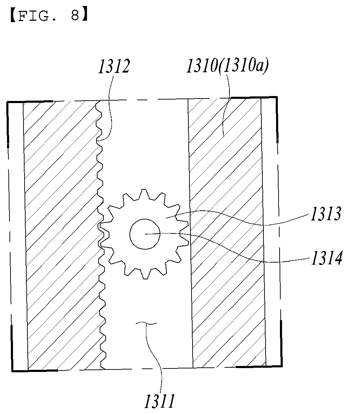

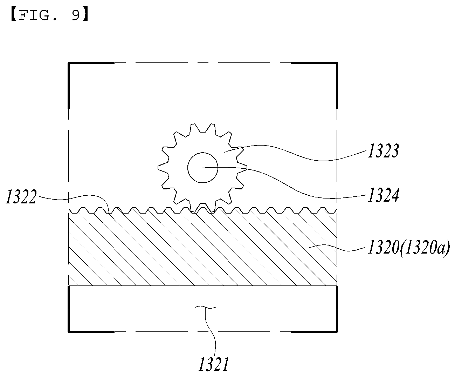

FIG. 6 is a perspective view of a plasticizer supply apparatus according to a second embodiment of the disclosure. FIG. 7 is an enlarged view illustrating a second embodiment of the first mounting unit. FIG. 8 is an enlarged view of portion A illustrated in FIG. 6. FIG. 9 is an enlarged view of portion B illustrated in FIG. 6.

The plasticizer supply apparatus according to the second embodiment of the present disclosure has the same structure as the plasticizer supply apparatus according to the first embodiment, except for a first mounting unit and a second mounting unit; therefore, a redundant description of the same configuration is omitted.

As illustrated in FIGS. 6 to 9, the second embodiment of the first mounting unit 1300' in the plasticizer supply apparatus 1000' may further include a first vertical frame gear 1313, a first vertical frame motor 1314, a first horizontal frame gear 1323, a first horizontal frame motor 1324, a first connecting frame motor 1331, a first fixed-frame motor 1341, and a motor fixing frame 1350 in addition to the components of the first embodiment described above.

In the first embodiment described above, the position of the nozzle 1200 may be manually adjusted by a worker. However, in the second embodiment, the position of the nozzle 1200 may be electrically adjusted by motors. An electric motor may be used as each of the first vertical frame motor 1314, the first horizontal frame motor 1324, the first connecting frame motor 1331, and the first fixed-frame motor 1341.

A first vertical frame tooth shape 1312 may be formed on an inner end of each first vertical frame 1310 along the longitudinal direction of the first vertical frame 1310. The first vertical frame gear 1313 may be disposed in the first vertical frame slot 1311 and may engage with the first vertical frame tooth shape 1312.

The first vertical frame motor 1314 may be fixed to a side surface of the housing 1100. A rotation shaft of the first vertical frame motor 1314 may pass through the side surface of the housing 1100 and may be fixed to the first vertical frame gear 1313 to rotate the first vertical frame gear 1313. The first vertical frame 1310 may linearly move in an up-and-down direction by driving the first vertical frame motor 1314 to adjust the height of the nozzle 1200.

A first horizontal frame tooth shape 1322 may be formed on an upper end of each first horizontal frame 1320 along a longitudinal direction of the first horizontal frame 1320. The first horizontal frame gear 1323 may be disposed on a top of the first horizontal frame 1320 and may engage with the first horizontal frame tooth shape 1322.

A rotation shaft of the first horizontal frame motor 1324 may be fixed to the first horizontal frame gear 1323 to rotate the first horizontal frame gear 1323. Accordingly, the nozzle 1200 may advance or retreat by driving the first horizontal frame motor 1324.

A rotation shaft of the first connecting frame motor 1331 may be fixed to an end of the first connecting frame 1330 to rotate the first connecting frame 1330. Accordingly, the nozzle 1200 may rotate in an up-and-down direction in conjunction with rotation of the first connecting frame 1330.

The motor fixing frame 1350 is a component configured to prevent idle rotation of the first horizontal frame motor 1324 and the first connecting frame motor 1331. The motor fixing frame 1350 may be formed in a rod shape. The motor fixing frame 1350 may be disposed and fixed between the first connecting frame motor 1331 and the first horizontal frame motor 1324.

The first fixed-frame motor 1341 may be fixed to an upper end of the first fixed frame 1340. A rotation shaft of the first fixed-frame motor 1341 may pass through the first fixed frame 1340 along a longitudinal direction of the first fixed frame 1340.

The rotation shaft of the first fixed-frame motor 1341 may be fixed to the nozzle 1200 to rotate the nozzle 1200 in a left-and-right direction. Accordingly, the nozzle 1200 may rotate upward, downward, leftward, and rightward and thereby uniformly spray plasticizer over a wider area in a repeated manner in a predetermined pattern such as a linear pattern, a circular pattern, or an elliptical pattern.

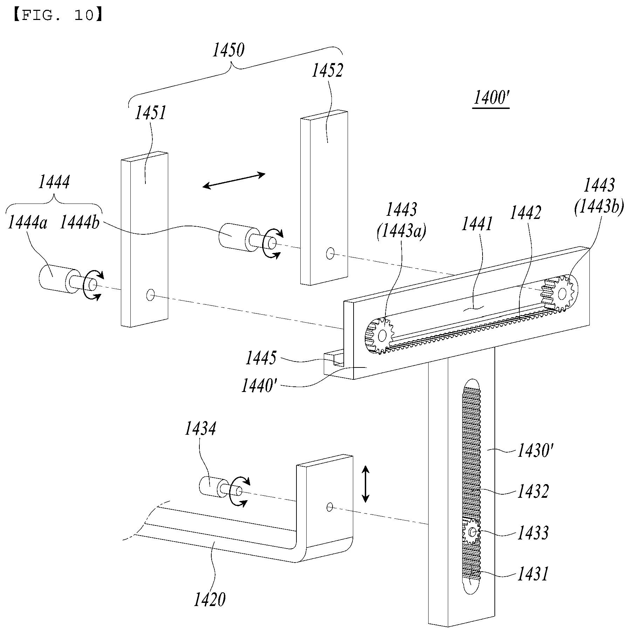

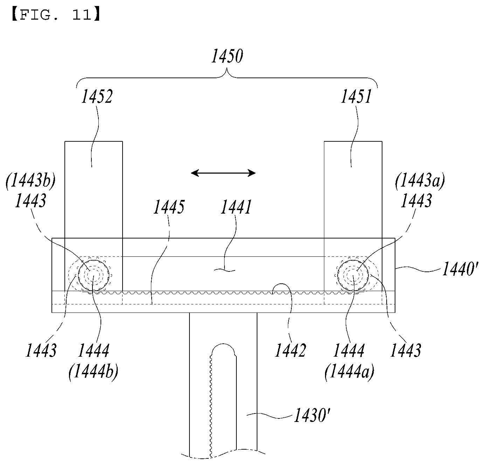

FIG. 10 is an exploded perspective view illustrating a second embodiment of the second mounting unit. FIG. 11 is a side view of the second mounting unit illustrated in FIG. 10.

As illustrated in FIGS. 10 and 11, the second embodiment of the second mounting unit 1400' may further include a second vertical frame gear 1433, a second vertical frame motor 1434, a second horizontal frame gear 1443, a second horizontal frame motor 1444, and a slide rail 1445 in addition to the components of the first embodiment described above. An electric motor may be used as each of the second vertical frame motor 1434 and the second horizontal frame motor 1444.

A second vertical frame tooth shape 1432 may be formed on an inner end of a second vertical frame 1430' along a longitudinal direction of the second vertical frame 1430'. The second vertical frame gear 1433 may be disposed in the second vertical frame slot 1431 and may engage with the second vertical frame tooth shape 1432.

The second vertical frame motor 1434 may be fixed to a side surface of the second connecting frame 1420. A rotation shaft of the second vertical frame motor 1434 may pass through the side surface of the second connecting frame 1420 and may be fixed to the second vertical frame gear 1433 to rotate the second vertical frame gear 1433.

A second horizontal frame slot 1441 may be formed in a second horizontal frame 1440' along a longitudinal direction of the second horizontal frame 1440'. A second horizontal frame tooth shape 1442 may be formed on an inner end of the second horizontal frame 1440' along the longitudinal direction of the second horizontal frame 1440'.

The number of second horizontal frame gears 1443 and the number of second horizontal frame motors 1444 may correspond to that of width adjusting frames 1450. In other words, the second horizontal frame gear 1443 may be provided as a pair including a second-1 horizontal frame gear 1443a and a second-2 horizontal frame gear 1443b.

Furthermore, the second horizontal frame motor 1444 may be provided as a pair including a second-1 horizontal frame motor 1444a and a second-2 horizontal frame motor 1444b. The second horizontal frame gears 1443 may be disposed in the second horizontal frame slot 1441 and may engage with the second horizontal frame tooth shape 1442.

Each second horizontal frame motor 1444 may be fixed to a side surface of the corresponding width adjusting frame 1450. A rotation shaft of the second horizontal frame motor 1444 may pass through the width adjusting frame 1450 and may be fixed to the second horizontal frame gear 1443 to rotate the second horizontal frame gear 1443.

The slide rail 1445 may be formed in an 'L' shape. The slide rail 1445 may be fixed to a side surface of the second horizontal frame 1440' along the longitudinal direction of the second horizontal frame 1440', and lower ends of the width adjusting frames 1450 may be inserted into the slide rail 1445. The width adjusting frames 1450 may linearly move in a left-and-right direction by driving the second horizontal frame gears 1443, thereby adjusting a width of the tow.

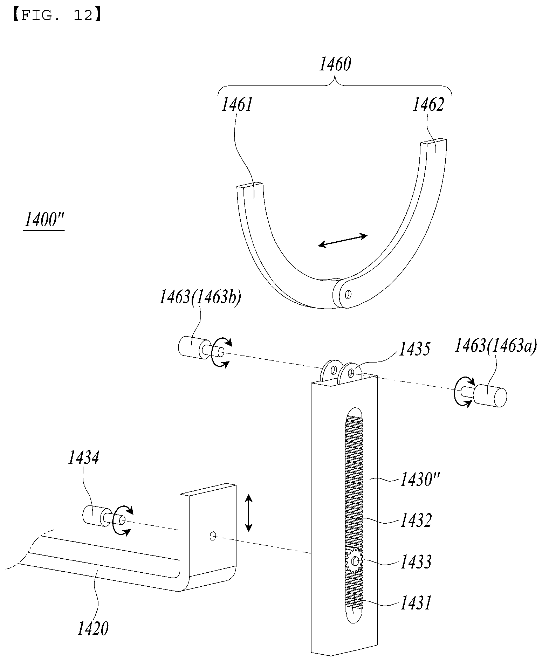

FIG. 12 is an exploded perspective view illustrating a third embodiment of the second mounting unit.

As illustrated in FIG. 12, the third embodiment of the second mounting unit 1400" may be formed in a 'U' shape. The second mounting unit 1400" may further include a round frame 1460 and a round frame motor 1463 in addition to the components of the first and second embodiments described above.

A hinge portion 1435 may protrude from an upper end of a second vertical frame 1430". The round frame 1460 may be provided as a pair, including a first round frame 1461 and a second round frame 1462. The round frames 1460 may be hinged to the hinge portion 1435 and may be disposed on opposite sides of the tow. The round frame motor 1463 may employ an electric motor.

The round frame motor 1463 may be provided as a pair including a first round frame motor 1463a and a second round frame motor 1463b. The round frame motors 1463 may be disposed to face each other and may be fixed to side surfaces of the hinge portion 1435.

A rotation shaft of each round frame motor 1463 may pass through the hinge portion 1435 and may be fixed to an end of the corresponding round frame 1460. The round frame motors 1463 may rotate the round frames 1460 to narrow or widen a width between the round frames 1460, thereby adjusting the width of the tow.

While the embodiments of the present disclosure have been described, it will be apparent to those skilled in the art that various changes or modifications of the present disclosure are possible by adding, changing, or deleting components without departing from the spirit of the present disclosure as defined in the following claims. It should be noted that these changes or modifications also fall within the scope of the present disclosure.

## Claims

1. A plasticizer supply apparatus for supplying plasticizer onto a tow passing through an air jet, the plasticizer supply apparatus comprising:
a housing located on a movement path of the tow moving toward the air jet and allowing the tow to pass therethrough; and
a nozzle installed on the housing and configured to spray the plasticizer toward the tow.

2. The plasticizer supply apparatus according to claim 1, further comprising a drain pipe installed on a lower portion of the housing.

3. The plasticizer supply apparatus according to claim 1, further comprising a supply unit configured to supply the plasticizer to the nozzle.

4. The plasticizer supply apparatus according to claim 3, wherein the supply unit comprises:
a supply tank configured to contain the plasticizer;
a supply pipe installed between the nozzle and the supply tank; and
a supply pump installed on the supply pipe and configured to pump the plasticizer to the nozzle under pressure.

5. The plasticizer supply apparatus according to claim 1, further comprising a first mounting unit installed on an upper portion of the housing and on which the nozzle is disposed.

6. The plasticizer supply apparatus according to claim 5, wherein the first mounting unit comprises:
a pair of first vertical frames installed on respective both side surfaces of the housing;
a pair of first horizontal frames installed on the respective first vertical frames;
a first connecting frame installed between the first horizontal frames; and
a first fixed frame installed on the first connecting frame and having a lower end on which the nozzle is disposed.

7. The plasticizer supply apparatus according to claim 6, wherein each of the first horizontal frames has a first horizontal frame slot formed along a longitudinal direction of the first horizontal frame, through which the first connecting frame passes.

8. The plasticizer supply apparatus according to claim 6, wherein each of the first vertical frames has a first vertical frame slot formed along a longitudinal direction of the first vertical frame.

9. The plasticizer supply apparatus according to claim 8,
wherein a first vertical frame tooth shape is formed on an inner end of each of the first vertical frames along the longitudinal direction of the first vertical frame, and
wherein the first mounting unit further comprises:
a first vertical frame gear disposed in the first vertical frame slot and engaging with the first vertical frame tooth shape; and
a first vertical frame motor installed on a side surface of the housing and configured to rotate the first vertical frame gear.

10. The plasticizer supply apparatus according to claim 6,
wherein a first horizontal frame tooth shape is formed on an upper end of each of the first horizontal frames along the longitudinal direction of the first horizontal frame, and
wherein the first mounting unit further comprises:
a first horizontal frame gear disposed on an upper portion of the first horizontal frame and engaging with the first horizontal frame tooth shape; and
a first horizontal frame motor configured to rotate the first horizontal frame gear.

11. The plasticizer supply apparatus according to claim 10, wherein the first mounting unit further comprises:
a first connecting frame motor installed on an end of the first connecting frame and configured to rotate the first connecting frame; and
a motor fixing frame installed between the first connecting frame motor and the first horizontal frame motor.

12. The plasticizer supply apparatus according to claim 6, wherein the first mounting unit further comprises a first fixed-frame motor installed on an upper end of the first fixed frame and configured to rotate the nozzle.

13. The plasticizer supply apparatus according to claim 1, further comprising a second mounting unit installed inside the housing so that the tow is placed on the second mounting unit.

14. The plasticizer supply apparatus according to claim 13, wherein the second mounting unit comprises:
a second fixed frame installed on an inner side surface of the housing;
a second connecting frame having one end installed on a lower portion of the second fixed frame;
a second vertical frame installed on the other end of the second connecting frame;
a second horizontal frame installed on an upper end of the second vertical frame and disposed under the tow; and
a pair of width adjusting frames installed on respective both sides of the second horizontal frame and disposed on both sides of the tow.

15. The plasticizer supply apparatus according to claim 14,
wherein the second horizontal frame has a second horizontal frame slot formed along a longitudinal direction of the second horizontal frame,
wherein a second horizontal frame tooth shape is formed on an inner end of the second horizontal frame along the longitudinal direction of the second horizontal frame, and
wherein the second mounting unit further comprises:
second horizontal frame gears disposed in the second horizontal frame slot and engaging with the second horizontal frame tooth shape; and
second horizontal frame motors passing through the respective width adjusting frames and configured to rotate the respective second horizontal frame gears.
